# EUROPÄISCHE PATENTSCHRIFT

(11) **EP 0 621 332 B1**
(45) Veröffentlichungstag und Bekanntmachung des Hinweises auf die Patenterteilung: **07.01.1999**
(21) Anmeldenummer: 94106172.3
(22) Anmeldetag: 21.04.1994
(51) Int. Cl.: C10G 1/10, C10G 1/00

(54) **Verfahren zur Spaltung und Hydrierung von Polymeren**
Process for the composition and hydrogenation of polymers
Procédé pour la décomposition et hydrogénation de polymères

(30) Priorität: 22.04.1993 DE 4313123; 01.02.1994 DE 4402953
(43) Veröffentlichungstag der Anmeldung: 26.10.1994
(73) Patentinhaber: VEBA OEL AG, 45876 Gelsenkirchen (DE)
(72) Erfinder: Hoffmann, Ulrich, Prof. Dr.-Ing., D-37154 Northeim (DE); Kunz, Dr.-Ing. Ulrich, D-38678 Clausthal-Zellerfeld (DE)
(74) Vertreter: Berg, Dirk, Dr.

(56) Entgegenhaltungen:
- DE-A- 2 530 229
- US-A- 4 118 282

## Beschreibung

Die Erfindung betrifft ein Verfahren zur Spaltung von Polymeren, insbesondere zur Wiederverwertung von Kunststoffen.

Die Wiederverwertung von Kunststoffen gewinnt immer mehr an Bedeutung, da sie wesentlich zur Einsparung von Energie, Rohstoffen und Deponieraum beiträgt. Bisherige Verfahren zur Wiederverwertung von Kunststoffen reichen von der Verbrennung bis zur Hydrierung in Sumpfphase-Reaktoren oder in Hydrocrackern zur Gewinnung von Mineralölen. Je nach Art des Verfahrens treten unterschiedliche Probleme und Nachteile auf. (vgL.: G. Menges (Hrsg.) "Recycling von Kunststoffen", C. Hanser Verlag, München 1992)

Die Verbrennung z. B. ist eine Endverwertung, die nur die Nutzung der freiwerdenden Verbrennungswärme erlaubt. Zudem hat die Verbrennung von Kunststoffen den Nachteil, daß bei der Prozeßführung besondere Bedingungen eingehalten werden müssen, um die Bildung von Dioxinen, insbesondere bei der Verbrennung von PVC, sicher zu vermeiden.

Bei der Gewinnung von Gasen aus Polymeren mittels Pyrolyse, einem weiteren Verfahren zur Verwertung von Kunststoffen, wird die molekulare Struktur der Polymere weitgehend abgebaut, was den Einsatz dieser Gase für die Herstellung von hochwertigen Produkten sehr stark einschränkt.

Auch das Einarbeiten von Alt-Kunststoff in Kunststoffmischungen, liefert nur Produkte, die weniger hochwertig sind als solche, die keine Anteile an Alt-Kunststoffen enthalten. Bekannt ist z. B. die Herstellung von Lärmschutzwänden, Blumenkübeln und dergleichen aus Alt-Kunststoffen.

Im Unterschied zu den bisher genannten Verfahren sind aber aus dem Stand der Technik auch Verwertungsverfahren bekannt, bei denen Mineralöle durch eine Spaltung und eine sich daran anschließende Hydrierung von Polymeren gewonnen werden (z.B. DE-A-25 30 229). Bekannt sind des weiteren die degradative Extrusion zur Polymerverflüssigung (z.B. DE-A-4 017 089) sowie die eingangs erwähnte Hydrierung von Polymeren unter hohem Druck in Sumpfphase-Reaktoren oder Hydrocrackern zur Gewinnung von Mineralölen (z.B. DE-A-4 311 034). Die Betriebsbedingungen zeichnen sich bei den genannten Verfahren durch hohe Drücke und Temperaturen aus. Betriebsdrücke von bis zu 400 bar und Temperaturen bis zu 500 °C sind üblich. Dadurch ist ein hoher Aufwand an Energie und eine aufwendige konstruktive und sicherheitstechnische Gestaltung der Anlagen für die Durchführung dieser Verfahren notwendig. US 4 118 282 beschreibt den Einsatz von Laser, Mikrowellen und Ultraschall bei der zersetzenden Destillation von hochmolekularen organischen Materialien.

Der Erfindung liegt demzufolge die Aufgabe zugrunde, ein Verfahren bereitzustellen, welches die aus dem Stand der Technik bekannten Nachteile vermeidet.

Die Aufgabe wird erfindungsgemäß durch ein Verfahren der eingangs erwähnten Art dadurch gelöst, daß die Polymere in einem ersten Verfahrensschritt in einen Reaktor gegeben werden, der wenigstens eine flüssige Phase enthält, und daß die Polymere in einem zweiten Verfahrensschritt mit Ultraschall in der flüssigen Phase aufgebrochen werden und die so erhaltenen reaktiven Polymerbruchstücke in einer sich direkt anschließenden Reaktion mit einem, zum Zeitpunkt des Entstehens der Polymerbruchstücke bereits im Reaktor vorhandenen Reaktionspartner zu den Verbindungen umgesetzt werden, die als Endprodukte des Verfahrens isolierbar sind und deren Reaktivität so gering ist, daß sie unter den Verfahrensbedingungen keine Vernetzungsreaktionen eingehen.

Das erfindungsgemäße Verfahren benutzt dabei die Tatsache, daß Polymere mittels Ultraschall abbaubar sind (A. Salzay, "The destruction of highly polymerized molecules by ultrasonic waves", Z. Phys. Chem. A164, 234-240 (1933) ).

Bei der Anwendung von Ultraschall in flüssigen Systemen kommt es zur Ausbildung von sogenannten Kavitationen. Wenn diese Kavitationen kollabieren, entstehen "hot spots", d. h. es entstehen mikroskopische Bereiche in denen für enige Mikrosekunden sehr hohe Temperaturen (bis ca. 5000 °C) und sehr hohe Drücke (bis zu 500 bar) auftreten, ohne daß dieses makroskopisch zu einer merklichen Veränderung der entsprechenden Betriebsparameter führt.

Bilden sich solche Kavitationen in der Nähe der Oberfläche von Polymerpartikeln, so kann es sowohl zur Verflüssigung der Polymere kommen, wobei eine Vermischung mit der flüssigen Phase eintreten kann, als auch zur Abspaltung von Molekülbruchstücken.

Gegenstand der Anmeldung ist dementsprechend eine Kombination der Spaltung von Polymeren mittels Ultraschall mit geeigneten Folgereaktionen. Hierbei ist es im Gegensatz zu den aus dem Stand der Technik bekannten Verfahren möglich, bei der Wiederverwertung von Polymeren makroskopische Bedingungen einzuhalten, die leicht handzuhaben sind.

Erfindungsgemäß ist vorgesehen die Reaktion, in der die im zweiten Verfahrensschritt erzeugten Polymerbruchstücke zu den als Endprodukten isolierbaren Verbindungen umgesetzt werden, entsprechend der in dem Verfahren zu verarbeitenden Polymeren zu wählen. Als solche nachgeschalteten Reaktionen finden bevorzugt die katalytische Hydrierung, die Verseifung bzw. Hydrolyse, Ammonolyse oder Alkoholyse Anwendung.

Ein überraschendes Ergebnis der erfindungsgemäßen Kombination der Spaltung von Polymeren mittels Ultraschall mit einer anschließenden katalytischen Hydrierung besteht in der Tatsache, daß die eingesetzten Polymere zu niedermolekularen Produkten abgebaut werden, die in üblichen Raffinerieverfahren weiter verarbeitbar sind und somit einem entsprechenden Kreislauf in der Petrochemie zugeführt werden können. Weiterhin ist es vorteilhaft, daß in dem Ausgangsmaterial enthaltene Heteroatome unter den Reaktionsbedingungen zumindest teilweise in ihre Wasserstoffverbindungen oder entsprechenden Salze überführt werden.

In einer besonderen Ausgestaltung des erfindungsgemäßen Verfahrens besteht die flüssige Phase aus Wasser oder einem Gemisch von Wasser und wenigstens einem organischen Lösungsmittel. Dabei ist es vorteilhaft, daß sich die Verfahrensprodukte in der organischen Phase anreichern können und zur Weiterverarbeitung in üblichen Raffinerieverfahren nur die wässrige Phase abgetrennt werden muß. Darüber hinaus lösen sich die aus den in den Polymeren enthaltenen Heteroatomen gebildeten Salze in der wässrigen Phase.

In einer weiteren Ausgestaltung des erfindungsgemäßen Verfahrens, wobei die flüssige Phase zumindest teilweise von Wasser gebildet wird, ist der Hydrierungskatalysator als Katalysatorvorläufer in Form einer Raney-Legierung von Aluminium und/oder Silizium mit wenigstens einem Metall aus der Gruppe von Nickel, Cobalt, Eisen, Kupfer oder Molybdän in der flüssigen Phase enthalten. Dabei ist es möglich, den Raney-Katalysator in situ zu erzeugen, wodurch der bei der Erzeugung des Katalysators freiwerdende Wasserstoff für die Hydrierung verwendet werden kann. Darüber hinaus tritt die Zersetzung der Raney-Legierung zu dem eigentlichen Raney-Katalysator unter Anwendung von Ultraschall wesentlich schneller als bisher üblich ein und außerdem ist durch die Einwirkung von Ultraschall über lange Zeit eine gleichbleibende Aktivität des Katalysators gewährleistet, da die Metalloberfläche durch den Einfluß von Ultraschall immer wieder von passivierenden Ablagerungen befreit wird bzw. sich solche passivierenden Ablagerungen unter Ultraschalleinfluß gar nicht erst bilden.

Es erweist sich weiterhin als besonders vorteilhaft, wenn der pH-Wert der flüssigen Phase, in der die Raney-Legierung enthalten ist, durch Zugabe von Alkali- und/oder Erdalkalihydroxiden bzw. -oxiden oder durch Zugabe einer wässrigen Lösung dieser Verbindungen vor dem Beschallen mit Ultraschall erhöht wird. Dabei ist es besonders vorteilhaft, wenn unittelbar nach Zugabe von wenigstens einer Alkalie der zweite Verfahrensschritt durchgeführt wird, so daß die Aktivierung des Katalysators beschleunigt und der dabei entstehende Wasserstoff zumindest teilweise an der Hydrierung der Molekülbruchstücke beteiligt ist. Auf diese Weise kann der größte Teil des Wasserstoffs, der bei der Erzeugung des Raney-Katalysators entsteht, für die Hydrierung der unter Ultraschalleinwirkung erzeugten Polymerbruchstücke genutzt werden.

In einer anderen vorteilhaften Ausgestaltung des erfindungsgemäßen Verfahrens wird eine Dispersion einer Raney-Legierung, wie sie bereits oben beschrieben wurde, in einer wässrigen alkalischen Lösung vor der Durchführung des zweiten Verfahrensschrittes in den Reaktor gegeben. Um einen möglichst großen Teil des sich aus der Dispersion entwickelnden Wasserstoffs für die Hydrierung der unter Ultraschalleinwirkung entstehenden Molekülbruchstücke nutzen zu können ist es wiederum von besonderem Vorteil, wenn der zweite Verfahrensschritt direkt nach Zugabe der Dispersion durchgeführt wird.

In einer weiteren vorteilhaften Ausgestaltung des erfindungsgemäßen Verfahrens wird vorzugsweise ein bereits aktivierter Raney-Katalysator eingesetzt. Da es bei einem bereits aktivierten Raney-Katalysator nicht mehr notwendig ist, Legierungsbestandteile mittels einer Lauge aus dem Katalysatorvorläufer herauszulösen, kann die flüssige Phase somit auch ausschließlich aus einem nicht-wässrigen Lösungsmittel oder Lösungsmittelgemisch bestehen.

Der sich aus der Durchführung des erfindungsgemäßen Verfahrens mit einer nicht-wässrigen bis zur wasserfreien flüssigen Phase ergebende Vorteil liegt in der Tatsache, daß vor der Weiterverarbeitung der Reaktionsprodukte kein zusätzlicher Verfahrensschritt nötig ist, um das sonst vorhandene Wasser von der flüssigen Phase abzutrennen. Dieser Vorteil wird besonders dann sehr groß sein, wenn Lösungsmittel oder Produkte aus der flüssigen Phase destillativ entfernt bzw. abgetrennt werden sollen und die abzutrennenden Verbindungen in der Lage sind, mit Wasser Azeotrope zu bilden.

Das erfindungsgemäße Verfahren bietet darüber hinaus den besonderen Vorzug, bereits verwendete Hydrierungskatalysatoren aus anderen Hydrierungsverfahren, wie z. B. der Fetthärtung zur Margarineherstellung, einsetzen zu können. Diese Katalysatoren besitzen in der Regel eine relativ geringe Aktivität, weil ihre katalytisch aktive Oberfläche zumindest teilweise bei der bisherigen Verwendung durch Verunreinigungen blockiert wurde.

Sinkt die Aktivität der Katalysatoren unter einen bestimmten Grenzwert, ist es bei den bekannten Katalyseverfahren in der Regel nur möglich, den Katalysator in einem aufwendigen Verfahren zu regenerieren oder zu entsorgen, wobei beide Möglichkeiten oftmals einen sehr großen Aufwand bedingen.

In dem erfindungsgemäßen Verfahren können diese in ihrer Aktivität deutlich verminderten Katalysatoren jedoch eingesetzt werden, weil die Katalysatoroberfläche unter der Einwirkung von Ultraschall von den abgelagerten Verunreinigungen befreit und somit die Katalysatoraktivität wieder erhöht wird.

Die Art der für die Hydrierung verwendeten Katalysatoren ist dementsprechend auch nicht auf Raney-Katalysatoren beschränkt. Die Verwendung z. B. von Palladium, Platin, Rhodium oder ähnlichen Metallen als Katalysatoren in dem erfindungsgemäßen Verfahren ist ebenso möglich.

Weiterhin ist es bei dem erfindungsgemäßen Verfahren von besonderem Vorteil, während des zweiten Verfahrensschrittes zusätzlich Wasserstoff in die flüssige Phase einzuleiten, um auf diese Weise eine möglichst vollständige und sofort nach der Bindungsspaltung erfolgende Hydrierung der Polymerbruchstücke sicherzustellen.

Der besondere Nutzen dieser Verfahrensweise ist darin begründet, daß durch die sofortige Hydrierung der Molekülbruchstellen eine Folgereaktion, wie z. B. eine Vernetzungsreaktion, unterbunden oder unmöglich wird. Gerade dieses ist von besonderer Bedeutung, da das im erfindungsgemäßen Verfahren eingesetzte polymere Material abgebaut und nicht höher vernetzt werden soll.

In einer weiteren Ausgestaltung des erfindungsgemäßen Verfahrens wird während des zweiten Verfahrensschrittes Kohlenmonoxid in die flüssige Phase eingeleitet. Hierbei ist es zweckmäßig, wenn der Reaktor einen Eisen-, Chrom-, Kupfer-, Zink- und/oder Aluminiumoxid enthaltenden Katalysator enthält, so daß das eingeleitete Kohlenmonoxid mit dem in der flüssigen Phase zweckmäßig enthaltenen Wasser katalytisch zu Wasserstoff und Kohlendioxid umgesetzt wird, wobei mit dem so entstandenen Wasserstoff die Polymerbruchstücke katalytisch hydriert werden.

In einer besonders vorteilhaften Ausgestaltung dieses Verfahrens wird während des zweiten Verfahrensschrittes Synthesegas, Wassergas oder ein anderes, im wesentlichen Kohlenmonoxid und Wasserstoff enthaltendes Prozeßgas, in die flüssige Phase eingeleitet. Die besonderen Vorteile dieser Verfahrensweise liegen darin begründet, daß vermieden wird, relativ teures Wasserstoffgas einzusetzen.

In einer anderen Ausgestaltung des erfindungsgemäßen Verfahrens ist das zu spaltende Polymer vorzugsweise durch eine Kondensationsreaktion aufgebaut worden. Beispiele für solche Polymere sind Polyester, Polyamide oder dergleichen.

Besonders vorteilhaft ist es, die durch Ultraschalleinwirkung im zweiten Verfahrensschritt entstandenen Polymerbruchstücke von Polyestern durch eine Verseifungsreaktion zu den als Endprodukten des Verfahrens isolierbaren Verbindungen umzusetzen. Hierdurch sind die Ausgangsverbindungen zur Polyester-Herstellung wieder erhältlich, so daß ein vollständiger Wiederverwertungskreislauf geschaffen wird.

Weitere besonders bevorzugte Reaktionen zur Umsetzung der in dem zweiten Verfahrensschritt mittels Ultraschall erzeugten Polymerbruchstücke sind die Alkoholyse, die Ammonolyse oder dergleichen.

Das erfindungsgemäße Verfahren ist außerdem sehr wirtschaftlich, da keine allzu hohen Anforderungen an das zu spaltende Material gestellt werden und Verfahrensparameter wie insbesondere Druck und Temperatur in einem Bereich liegen, der ohne besonderen konstruktiven Aufwand oder hohen Einsatz an Energie erreicht wird. So arbeitet das Verfahren vorzugsweise bei einem Betriebsdruck von 0,1 bis 10 bar und einer Temperatur von 0 bis 150 °C. Weiterhin ist es nicht notwendig, die zu spaltenden Polymere sortenrein in dem Verfahren einzusetzen. Darüber hinaus ist es aber von Vorteil, daß einzusetzende Material vor der Durchführung des Verfahrens zu zerkleinern. Dieses läßt sich am besten am Beispiel von Kunststoffabfällen verdeutlichen, da bei der Zerkleinerung zu Pulver, Granulat oder geschreddertem Kunststoff gleichzeitig eine gewisse Homogenisierung der verschiedenen Anteile der eingesetzten Kunststoffabfälle erfolgt. Enthält das eingesetzte Material auch Zusätze wie Weichmacher, Stabilisatoren, Antioxidationsmittel, Gleitmittel, Farbstoffe, Flammschutzmittel und andere in der Polymerverarbeitung ublichen Hilfsstoffe, stört dies das erfindungsgemäße Verfahren nicht, so daß eine sehr breite Anwendung des Verfahrens auf verschiedenste Polymere und Kunststoffe möglich ist.

Bei einer besonderen Ausgestaltung des erfindungsgemäßen Verfahrens werden die Reaktionsprodukte je nach gewünschter mittleren Molmasse aus dem Gemisch entfernt. Dieses geschieht vorzugsweise durch Destillation zur Entfernung von Reaktionsprodukten mit niedrigem Siedepunkt und durch Extraktion zur Entfernung von höhermolekularen Produkten.

Gegenstand der vorliegenden Anmeldung ist desweiteren eine bevorzugte Ausführungsform des beschriebenen Verfahrens, die dadurch gegeben ist, daß die flüssige Phase durch eine zur Enthalogenierung des Polymers geeignete Flüssigkeit gebildet ist.

Es ist bekannt, beispielsweise Polyvinylchlorid mit Hilfe von Basen zu entchloren. Geeignete Basen sind Alkalilaugen, Amine, Alkylamide, usw.

Diese Flüssigkeiten können bei dem erfindungsgemäßen Verfahren als flüssige Phase eingesetzt werden, um so bei der Ultraschalleinwirkung, die zu der Ausbildung der Kavitationen in der Flüssigkeit führt, die Dehydrohalogenierung des Polymers in einer beschleunigten Form auszuführen. Es ist daher möglich, bei dem Abbau des Polymers durch Ultraschalleinwirkung gleichzeitig eine sehr wirksame Dehydrohalogenierung vorzunehmen.

Die Wirksamkeit wird noch dadurch verstärkt, daß die Ultraschalleinwirkung in Gegenwart eines Phasentransferkatalysators ausgeführt wird. Phasentransferkatalysatoren sind bekannt und sind insbesondere quaternäre Ammonium- oder Phosphorsalze, Kronenether usw. In der praktischen Anwendung werden bevorzugt quaternäre Ammoniumsalze eingesetzt.

Die Verwendung eines Phasentransferkatalysators ist aber nicht nur zur Dehydrohalogenierung von halogenhaltigen Polymeren geeignet, sondern auch zur Spaltung von Polymeren, die durch eine Gleichgewichtsreaktion hergestellt wurden. Ein bedeutsamer Vertreter dieser Polymere ist Polyethylenterephtalat (PET), das somit bei Verwendung eines Phasentransferkatalysators mit dem Verfahren des Hauptpatents abbaubar ist.

Gegenstand der vorliegenden Anmeldung ist daher auch eine bevorzugte Ausführungsform des Verfahrens bei der die Ultraschalleinwirkung in Gegenwart eines Phasentransferkatalysators vorgenommen wird.

Die mit dem Verfahren gemäß dieser Anmeldung behandelten Polymere können ohne eine sonst für die Dehydrohalogenierung benötigte Quell-Behandlung, beispielsweise mit Tetrahydrofuran und Butanol eingesetzt werden.

Die nachstehend aufgelisteten Versuchsergebnisse verdeutlichen die Dehydrohalogenierung von PVC, die mit Ultraschall und Einsatz eines Phasentransferkatalysators auch ohne Quellungsmittel möglich ist sowie den Abbau von PET, der nur mit dem Einsatz eines Phasentransferkatalysators möglich ist.
- Dehydrohalogenierung von PVC, ohne Phasentransferkatalysator:

| Ultraschall | Einsatz | Lösungs-/Quellungsmittel | Alkali | Temperatur | Reaktionszeit | Umsatz | Nr. |
|---|---|---|---|---|---|---|---|
| nein | 1 g PVC | Tetrahydrofuran,Butanol | NaOH | 60 °C | 1 Stunde | 0,0% | 3 |
| | | | | | | | |
| ja | 1 g PVC | Tetrahydrofuran,Butanol | NaOH | 60 °C | 1 Stunde | 6,7% | 4 |

- Dehydrohalogenierung von PVC, mit Phasentransferkatalysator:

| Ultraschall | Einsatz | Lösungs-/Quellungsmittel | Alkali | Temperatur | Reaktionszeit | Umsatz | Nr. |
|---|---|---|---|---|---|---|---|
| nein | 1 g PVC | - | NaOH | 60 °C | 1 Stunde | 3,1% | 5 |
| | | | | | | | |
| ja | 1 g PVC | - | NaOH | 60 °C | 1 Stunde | 3,6% | 6 |

- Abbau von Polyethylenterephtalat, ohne Phasentransferkatalysator:

| Ultraschall | Einsatz | Lösungs-/Quellungsmittel | Alkali | Temperatur | Reaktionszeit | Umsatz | Nr. |
|---|---|---|---|---|---|---|---|
| nein | 2,5g PET | - | NaOH | 80 °C | 2 Stunden | 0% | 7 |
| | | | | | | | |
| ja | 2,5g PET | - | NaOH | 50 °C | 0,7 Stunden | 0% | 8 |

- Abbau von Polyethylenterephtalat, mit Phasentransferkatalysator:

| Ultraschall | Einsatz | Lösungs-/Quellungsmittel | Alkali | Temperatur | Reaktionszeit | Umsatz | Nr |
|---|---|---|---|---|---|---|---|
| nein | 2,5g PET | - | NaOH | 60 °C | 1 Stunde | 3,6% | 9 |
| | | | | | | | |
| ja | 2,5g PET | - | NaOH | 60 °C | 1 Stunde | 7,12% | 10 |

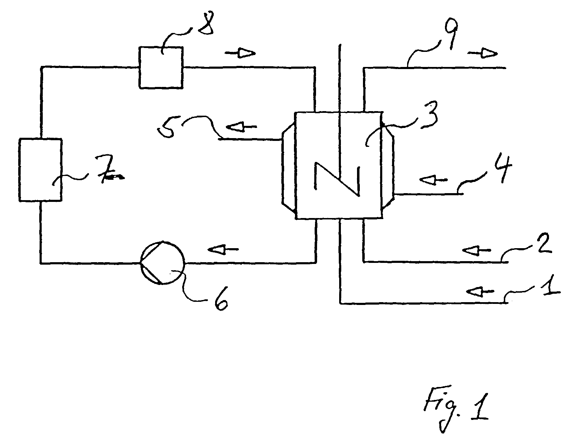

Ein schematischer Aufbau zur Durchführung des Verfahrens ist in Figur 1 dargestellt.

Über Zuleitungen 1 und 2 erfolgt eine Zufuhr von Gasen, Flüssigphase und zu spaltendem Polymer in einen Rührkesselreaktor 3. Durch einen über einen Wärmetauschereinlaß 4 und einen Wärmetauscherauslaß 5 gespeisten Wärmetauscher wird der Rührkesselreaktor 3 temperiert, so daß die in dem Rührkesselreaktor enthaltene flüssige Phase auf eine optimale Temperatur eingestellt ist, wenn sie durch eine Pumpe 6 umgewälzt wird. Nach der Pumpe 6 folgt in Flußrichtung eine Ultraschalldurchflußzelle 7, in der die Spaltung des in der flüssigen Phase enthaltenen Polymers sowie die Reaktion zu den isolierbaren Endprodukten erfolgt. Eine Steuerung der Durchflußrate durch die Ultraschalldurchflußzelle 7 erfolgt über die Regelung der Pumpleistung der Pumpe 6. In einer zur Ultraschalldurchflußzelle 7 nachfolgenden Stufe wird eine Extraktionsstelle 8 gespeist, in der höhermolekulare Spaltprodukte aus der flüssigen Phase entfernt werden, bevor diese wieder in den Rührkesselreaktor 3 gelangt. Niedermolekulare Spaltprodukte werden bevorzugt über eine Auslaßleitung 9 aus dem Rührkesselreaktor 3 abgeführt.

## Patentansprüche

1. Verfahren zur Spaltung von Polymeren, insbesondere zur Wiederverwertung von Kunststoffen, **dadurch gekennzeichnet,** daß die Polymere in einem ersten Verfahrensschritt in einen Reaktor gegeben werden, der wenigstens eine flüssige Phase enthält, und daß die Polymere in einem zweiten Verfahrensschritt mit Ultraschall in der flüssigen Phase aufgebrochen werden und die so erhaltenen reaktiven Polymerbruchstücke in einer sich direkt anschließenden Reaktion mit einem, zum Zeitpunkt des Entstehens der Polymerbruchstücke bereits im Reaktor vorhandenen Reaktionspartner zu den Verbindungen umgesetzt werden, die als Endprodukte des Verfahrens isolierbar sind und deren Reaktivität so gering ist, daß sie unter den Verfahrensbedingungen keine Vernetzungsreaktionen eingehen.

2. Verfahren nach Anspruch 1, **dadurch gekennzeichnet,** daß die reaktiven Polymerbruchstücke direkt nach ihrer Entstehung katalytisch hydriert werden.

3. Verfahren nach Anspruch 2, **dadurch gekennzeichnet,** daß der zur Hydrierung verwendete Katalysator vor dem zweiten Verfahrensschritt in Form einer Raney-Legierung von Aluminium und/oder Silizium mit wenigstens einem Metall aus der Gruppe von Nickel, Cobalt, Eisen, Kupfer oder Molybdän in den Reaktor gegeben wird.

4. Verfahren nach Anspruch 3, **dadurch gekennzeichnet,** daß Alkali- und/oder Erdalkalihydroxide bzw. -oxide oder eine wässrige Losung dieser Verbindungen vor dem zweiten Verfahrensschritt in den Reaktor gegeben werden.

5. Verfahren nach Anspruch 4, **dadurch gekennzeichnet,** daß der zweite Verfahrensschritt unmittelbar nach Zugabe der Alkaliverbindung oder deren wässriger Lösung durchgeführt wird, so daß die Aktivierung des Katalysators durch die Ultraschalleinwirkung beschleunigt wird und der dabei entstehende Wasserstoff zumindest teilweise an der Hydrierung der Polymerbruchstücke beteiligt ist.

6. Verfahren nach Anspruch 1, **dadurch gekennzeichnet,** daß eine Dispersion einer Raney-Legierung aus Aluminium und/oder Silizium mit wenigstens einem Metall aus der Gruppe von Nickel, Cobalt, Eisen, Kupfer oder Molybdän in einer alkalischen wässrigen Lösung vor der Durchführung des zweiten Verfahrensschrittes in den Reaktor gegeben wird.

7. Verfahren nach Anspruch 6, **dadurch gekennzeichnet,** daß unmittelbar nach der Zugabe der alkalischen Dispersion der Raney-Legierung der zweite Verfahrensschritt durchgeführt wird, so daß die Aktivierung des Katalysators beschleunigt wird und der dabei entstehende Wasserstoff zumindest teilweise an der Hydrierung der Molekühlbruchstücke beteiligt ist.

8. Verfahren nach Anspruch 1, **dadurch gekennzeichnet,** daß vor dem zweiten Verfahrensschritt ein bereits aktivierter Raney-Katalysator in den Reaktor gegeben wird.

9. Verfahren nach Anspruch 1, **dadurch gekennzeichnet,** daß vor dem zweiten Verfahrensschritt ein bereits in anderen Prozessen benutzter Hydrierungskatalysator mit verminderter Aktivität in den Reaktor gegeben wird.

10. Verfahren nach einem der Ansprüche 5 bis 9, **dadurch gekennzeichnet,** daß während des zweiten Verfahrensschrittes Wasserstoff in die flüssige Phase eingeleitet wird.

11. Verfahren nach Anspruch 9 oder 10, **dadurch gekennzeichnet,** daß das Verfahren in einem nicht-wässrigen bis wasserfreien Lösungsmittel durchgeführt wird.

12. Verfahren nach einem der Ansprüche 1 bis 10, **dadurch gekennzeichnet,** daß während des zweiten Verfahrensschrittes Kohlenmonoxid in die flüssige Phase eingeleitet wird.

13. Verfahren nach Anspruch 12, **dadurch gekennzeichnet,** daß mittels eines Eisen-, Chrom-, Kuper-, Zink- und/oder Aluminiumoxid enthaltenen Katalysators das eingeleitete Kohlenmonoxid mit dem in der flüssigen Phase enthaltenen Wasser katalytisch zu Wasserstoff und Kohlendioxid umgesetzt wird, wobei mit dem so entstandenen Wasserstoff die Polymerbruchstücke katalytisch hydriert werden.

14. Verfahren nach einem der Ansprüche 1 bis 10, **dadurch gekennzeichnet,** daß während des zweiten Verfahrensschrittes Synthesegas, Wassergas oder ein anderes, im wesentlichen Kohlenmonoxid und Wasserstoff enthaltendes Prozeßgas in die flüssige Phase eingeleitet wird.

15. Verfahren nach Anspruch 14, **dadurch gekennzeichnet,** daß mittels eines Eisen-, Chrom-, Kupfer-, Zink- und/oder Aluminiumoxid enthaltenden Katalysators das in dem Prozeßgas enthaltene Kohlenmonoxid mit dem in der flüssigen Phase enthaltenen Wasser katalytisch zu Wasserstoff und Kohlendioxid umgesetzt wird, wobei die Polymerbruchstücke mit dem so entstandenen Wasserstoff katalytisch hydriert werden.

16. Verfahren nach Anspruch 1, **dadurch gekennzeichnet,** daß das zu spaltende Polymer ein durch eine Kondensationsreaktion aufgebauter Polyester, Polyamid oder dergleichen ist.

17. Verfahren nach Anspruch 16, **dadurch gekennzeichnet,** daß die durch Ultraschalleinwirkung im zweiten Verfahrensschritt entstandenen Polymerbruchstücke durch eine Versteifungsreaktion zu den als Endprodukten des Verfahrens isolierbaren Verbindungen umgesetzt werden.

18. Verfahren nach Anspruch 16, **dadurch gekennzeichnet,** daß die durch Ultraschalleinwirkung im zweiten Verfahrensschritt entstandenen Polymerbruchstücke durch eine Alkoholyse, Ammonolyse oder dergleichen zu den als Endprodukten des Verfahrens isolierbaren Verbindungen umgesetzt werden.

19. Verfahren nach einem der vorhergehenden Ansprüche, **dadurch gekennzeichnet,** daß das zu spaltende Material aus einem gepulverten, einem granulierten oder einem geschredderten Polymer besteht.

20. Verfahren nach einem der vorhergehenden Ansprüche, **dadurch gekennzeichnet,** daß wenigstens der zweite Verfahrensschritt bei einem Druck bis 10 bar und einer Temperatur von 0 bis 150 °C durchgeführt wird.

21. Verfahren nach einem der vorhergehenden Ansprüche, **dadurch gekennzeichnet,** daß die Reaktionsprodukte ständig durch Destillation oder Extraktion entfernt werden.

22. Verfahren nach Anspruch 1, dadurch gekennzeichnet, daß die flüssige Phase durch eine zur Enthalogenierung des Polymers geeignete Flüssigkeit gebildet ist.

23. Verfahren nach Anspruch 1, dadurch gekennzeichnet, daß die Ultraschalleinwirkung in Gegenwart eines Phasentransferkatalysators ausgeführt wird.

24. Verfahren nach Anspruch 22 oder 23, gekennzeichnet durch die Anwendung des Verfahrens auf PET.

25. Verfahren nach einem der Ansprüche 22 bis 24, dadurch gekennzeichnet, daß das Polymer ohne Quell-Behandlung verwendet wird.

26. Verfahren nach einem der Ansprüche 22 bis 25, dadurch gekennzeichnet, daß wenigstens der zweite Verfahrensschritt bei einem Druck bis 10 bar und einer Temperatur von 0 bis 150 °C durchgeführt wird.

## Claims

1. Process for the cleavage of polymers, in particular for the recycling of plastics materials, characterized in that, in a first process step, the polymers are introduced into a reactor which contains at least one liquid phase and in that, in a second process step, the polymers are broken up with ultrasound in the liquid phase and the reactive polymer fragments thus obtained are converted, in an immediately subsequent reaction, with a coreactant already present in the reactor at the time of the production of the polymer fragments, into compounds which can be isolated as final products of the process and whose reactivity is so low that they do not enter into any crosslinking reactions under the process conditions.

2. Process according to Claim 1, characterized in that the reactive polymer fragments are catalytically hydrogenated immediately after their production.

3. Process according to Claim 2, characterized in that the catalyst used for the hydrogenation is introduced into the reactor before the second process step in the form of a Raney alloy of aluminium and/or silicon containing at least one metal from the group comprising nickel, cobalt, iron, copper or molybdenum.

4. Process according to Claim 3, characterized in that alkali hydroxides or oxides and/or alkaline-earth hydroxides or oxides or an aqueous solution of said compounds is introduced into the reactor before the second process step.

5. Process according to Claim 4, characterized in that the second process step is performed immediately after adding the alkali compound or its aqueous solution so that the activation of the catalyst is accelerated by the exposure to ultrasound and the hydrogen produced in this process participates, at least partially, in the hydrogenation of the polymer fragments.

6. Process according to Claim 1, characterized in that a dispersion of a Raney alloy composed of aluminium and/or silicon containing at least one metal from the group comprising nickel, cobalt, iron, copper or molybdenum in an alkaline aqueous solution is introduced into the reactor before the second process step is performed.

7. Process according to Claim 6, characterized in that the second process step is performed immediately after the addition of the alkaline dispersion of the Raney alloy so that the activation of the catalyst is accelerated and the hydrogen produced in this process participates, at least partially, in the hydrogenation of the molecule fragments.

8. Process according to Claim 1, characterized in that an already activated Raney catalyst is introduced into the reactor before the second process step.

9. Process according to Claim 1, characterized in that a hydrogenation catalyst which has already been used in other processes and has reduced activity is introduced into the reactor before the second process step.

10. Process according to one of Claims 5 to 9, characterized in that hydrogen is introduced into the liquid phase during the second process step.

11. Process according to Claim 9 or 10, characterized in that the process is performed in a nonaqueous to anhydrous solvent.

12. Process according to one of Claims 1 to 10, characterized in that carbon monoxide is introduced into the liquid phase during the second process step.

13. Process according to Claim 12, characterized in that the carbon monoxide introduced is catalytically reacted with the water contained in the liquid phase into hydrogen and carbon dioxide by means of a catalyst containing iron oxide, chromium oxide, copper oxide, zinc oxide and/or aluminium oxide, the polymer fragments being catalytically hydrogenated by the hydrogen thus produced.

14. Process according to one of Claims 1 to 10, characterized in that, during the second process step, synthesis gas, water gas or another process gas essentially containing carbon monoxide and hydrogen is introduced into the liquid phase.

15. Process according to Claim 14, characterized in that the carbon monoxide contained in the process gas is catalytically reacted with the water contained in the liquid phase into hydrogen and carbon dioxide by means of a catalyst containing iron oxide, chromium oxide, copper oxide, zinc oxide and/or aluminium oxide, the polymer fragments being catalytically hydrogenated by the hydrogen thus produced.

16. Process according to Claim 1, characterized in that the polymer to be cleaved is a polyester, polyamide or the like synthesized by a condensation reaction.

17. Process according to Claim 16, characterized in that the polymer fragments produced by exposure to ultrasound in the second process step are converted by a saponification reaction into the compounds which can be isolated as end products of the process.

18. Process according to Claim 16, characterized in that the polymer fragments produced by exposure to ultrasound in the second process step are converted by alcoholysis, ammonolysis or the like into compounds which can be isolated by the process as end products.

19. Process according to one of the preceding claims, characterized in that the material to be cleaved is composed of a powdered, a granulated or a shredded polymer.

20. Process according to one of the preceding claims, characterized in that at least the second process step is performed at a pressure of up to 10 bar and a temperature of 0 to 150°C.

21. Process according to one of the preceding claims, characterized in that the reaction products are continuously removed by distillation or extraction.

22. Process according to Claim 1, characterized in that the liquid phase is formed by a liquid suitable for the dehalogenation of the polymer.

23. Process according to Claim 1, characterized in that the exposure to ultrasound is performed in the presence of a phase transfer catalyst.

24. Process according to Claim 22 or 23, characterized by the application of the process to PET.

25. Process according to one of Claims 22 to 24, characterized in that the polymer is used without swelling treatment.

26. Process according to one of Claims 22 to 25, characterized in that at least the second process step is performed at a pressure of up to 10 bar and a temperature of 0 to 150°C.

## Revendications

1. Procédé de dissociation de polymères, en particulier pour le recyclage de matières plastiques,
caractérisé en ce que
• les polymères dans une première étape du procédé sont amenés dans un réacteur, qui contient au moins une phase liquide, et
• les polymères sont rompus dans une deuxième étape de procédé par des ultrasons dans la phase liquide et les morceaux de polymères obtenus ainsi réactifs sont transformés, dans une réaction se raccordant directement à un partner de réaction existant déjà dans le réacteur au moment de la formation des fragments de morceaux de polymères, en les composés, qui peuvent être isolés comme produits finals du procédé et dont la réactivité est si petite, qu'ils ne se prêtent pas dans les conditions du procédé à des réactions de réticulation.

2. Procédé selon la revendication 1,
caractérisé en ce que
les fragments de morceaux de polymères réactifs sont hydrogénés catalytiquement directement après leur formation.

3. Procédé selon la revendication 2,
caractérisé en ce que
le catalyseur utilisé pour l'hydrogénation avant la deuxième étape du procédé est cédé au réacteur sous la forme d'un alliage de Raney d'aluminium et/ou de silicium avec au moins un métal du groupe nickel, cobalt, fer, cuivre ou mobyldène.

4. Procédé selon la revendication 3,
caractérisé en ce que
des hydroxydes ou des oxydes alcalins et/ou alcalino-terreux ou une solution aqueuse de ces composés sont envoyés dans le réacteur avant la deuxième étape du procédé.

5. Procédé selon la revendication 4,
caractérisé en ce que
la deuxième étape du procédé réalisée directement après addition du composé alcalin ou de sa solution aqueuse, de sorte que l'activation du catalyseur est accélérée par l'action des ultrasons et que l'hydrogène naissant participe au moins partiellement à l'hydrogénation des fragments de morceaux de polymères.

6. Procédé selon la revendication 1,
caractérisé en ce qu'
une dispersion d'un alliage de Raney en aluminium et/ou silicium avec au moins un métal du groupe nickel, cobalt, fer, cuivre ou mobyldène en une solution aqueuse alcaline est envoyée dans le réacteur avant la réalisation de la deuxième étape du procédé.

7. Procédé selon la revendication 6,
caractérisé en ce que
directement après l'addition de la dispersion alcaline de l'alliage de Raney est exécutée la deuxième étape du procédé, de sorte que l'activation du catalyseur est accélérée et que l'hydrogène en outre naissant participe au moins partiellement à l'hydrogénation des fragments de morceaux de molécules.

8. Procédé selon la revendication 1,
caractérisé en ce qu'
avant la deuxième étape de procédé, un catalyseur de Raney déjà activé est envoyé dans le réacteur.

9. Procédé selon la revendication 1,
caractérisé en ce qu'
avant la deuxième étape du procédé un catalyseur d'hydrogénation déjà utilisé dans d'autres processus ayant une activité réduite est envoyé dans le réacteur.

10. Procédé selon une des revendications 5 à 9,
caractérisé en ce que
pendant la deuxième étape du procédé de l'hydrogène est introduit dans la phase liquide.

11. Procédé selon les revendications 9 ou 10,
caractérisé en ce que
le procédé est réalisé dans un solvant non aqueux à exempt d'eau.

12. Procédé selon une des revendications 1 à 10,
caractérisé en ce que
pendant la deuxième étape du procédé du monoxyde de carbone est introduit dans la phase liquide.

13. Procédé selon la revendication 12,
caractérisé en ce qu'
au moyen d'un catalyseur contenant de l'oxyde de fer, de chrome, de cuivre, de zinc et/ou d'aluminium, le monoxyde de carbone introduit est transformé catalytiquement avec l'eau contenue dans la phase liquide en hydrogène et dioxyde de carbone, les fragments de morceaux de polymères étant hydrogénés catalytiquement par l'hydrogène ainsi naissant.

14. Procédé selon une des revendications 1 à 10,
caractérisé en ce que
pendant la deuxième étape de procédé, du gaz de synthèse, du gaz à l'eau ou un autre gaz de procédé contenant essentiellement du monoxyde de carbone et de l'hydrogène est introduit dans la phase liquide.

15. Procédé selon la revendication 14,
caractérisé en ce qu'
au moyen d'un catalyseur contenant de l'oxyde de fer, de chrome, de cuivre, de zinc et/ou d'aluminium, le monoxyde de carbone contenu dans le gaz de procédé est transformé avec l'eau contenue dans la phase liquide catalytiquement en hydrogène et dioxyde de carbone, les fragments de morceaux de polymères étant hydrogénés catalytiquement avec l'hydrogène ainsi naissant.

16. Procédé selon la revendication 1,
caractérisé en ce que
le polymère à décomposer est un polyester, une polyamide ou un corps équivalent constitué par une réaction de condensation.

17. Procédé selon la revendication 16,
caractérisé en ce que
les fragments de morceaux de polymères naissant dans la deuxième étape de procédé par action des ultrasons sont transformés par une réaction de raidissement en des composés isolables en tant que produits finals du procédé.

18. Procédé selon la revendication 16,
caractérisé en ce que
les fragments de morceaux de polymères naissant dans la deuxième étape de procédé par action des ultrasons sont transformés par une alcoolyse, ammonolyse ou opération équivalente en des composés isolables en tant que produits finals du procédé.

19. Procédé selon une des revendications précédentes,
caractérisé en ce que
le matériau à dissocier se compose d'un polymère en poudre, d'un polymère en granulés ou d'un polymère découpé en bandes.

20. Procédé selon une des revendications précédentes,
caractérisé en ce qu'
au moins la deuxième étape du procédé est réalisée à une pression de 10 bars et à une température de 0 à 150°C.

21. Procédé selon une des revendications précédentes,
caractérisé en ce que
les produits réactionnels sont enlevés en continu par distillation ou extraction.

22. Procédé selon la revendication 1,
caractérisé en ce que
la phase liquide est formée par un liquide approprié à la déshalogénation du polymère.

23. Procédé selon la revendication 1,
caractérisé en ce que
l'action des ultrasons est réalisée en présence d'un catalyseur de transfert de phases.

24. Procédé selon les revendications 22 ou 23,
caractérisé par
l'utilisation du procédé au PET.

25. Procédé selon une des revendications 22 à 24,
caractérisé en ce que
le polymère est utilisé sans traitement gonflant.

26. Procédé selon une des revendications 22 à 25,
caractérisé en ce qu'
au moins la deuxième étape du procédé est réalisée à une pression jusqu'à 10 bars et à une température de 0 à 150°C.
